(19) Europäisches Patentamt
European Patent Office
Office européen des brevets

(11) EP 4 592 729 A1

(12) EUROPEAN PATENT APPLICATION
published in accordance with Art. 153(4) EPC

(43) Date of publication:
30.07.2025 Bulletin 2025/31

(51) International Patent Classification (IPC):
*G02B 23/00* (2006.01)

(21) Application number: 22958970.0

(52) Cooperative Patent Classification (CPC):
G02B 23/02; G02B 7/02; G02B 23/00

(22) Date of filing: 19.09.2022

(86) International application number:
PCT/CN2022/119501

(87) International publication number:
WO 2024/059956 (28.03.2024 Gazette 2024/13)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Nantong Schmidt Opto-Electrical
Technology Co., Ltd
Nantong, Jiangsu 226503 (CN)

(72) Inventors:
• SUN, Yufeng
  Nantong, Jiangsu 226500 (CN)
• HUO, Fengxia
  Nantong, Jiangsu 226500 (CN)

(74) Representative: Forresters IP LLP
Skygarden
Erika-Mann-Straße 11
80636 München (DE)

(54) **ADJUSTABLE FOCUS INDICATOR FOR TELESCOPE**

(57) An adjustable focus indicator system for an optical instrument comprises: first and second longitudinally extending tubes, the second tube comprising a bore-defining surface shaped to define a longitudinally extending bore wherein at least a portion of the first tube is located in the bore; and a focus indicator supported by, and moveable in the longitudinal direction relative to, one of the first and second tubes, the focus indicator comprising a first focus indicator mark. The one of the first and second tubes and the other one of the first and second tubes are moveable relative to one another in the longitudinal direction to thereby move the focus indicator and the first focus indicator mark relative to a second focus indicator mark on the other one of the first and second tubes.

FIG. 4

## Description

## Field

The present invention relates to the field of optical instruments, such as telescopes and/or the like. Some aspects of the invention provide an adjustable focus indicator for an optical instrument, such as a telescope and/or the like.

## Background

Optical instruments (e.g. telescopes and/or the like) which are used to view or capture images of a scene typically include an objective lens or primary mirror. A lens (or mirror) has an associated focal length $f_o$. The focal length of a lens (or mirror) is a measure of how strongly the lens or mirror converges or diverges light. A lens or mirror with a focal length having a relatively small magnitude bends light rays relatively sharply (bringing the light rays into focus in a shorter distance). For the special case of a thin lens in air, the focal length is the distance over which collimated (parallel) input rays (e.g. rays that originate from infinity) are brought to focus. The plane perpendicular to the optical axis of the lens (or mirror) at which the image of an object is focused is known as an image plane. When an object is located at infinity (parallel input rays), the image plane corresponds with the focal plane (i.e. a plane perpendicular to the optical axis of the lens (or mirror) at a distance $f_o$ from the principal plane of the lens (or mirror). When an object is located at closer to the objective lens (or primary mirror), the image plane will be different from the focal plane.

Typically, optical instruments (e.g. telescopes and/or the like) are compound optical systems that comprise more than one lens or optical mirror. For example, a telescope will typically include an eyepiece in addition to its objective lens (or primary mirror). The eyepiece functions to magnify the light from the objective lens (or primary mirror). The eyepiece will have its own lens(es) and/or mirror(s), each of which has its own focal length, providing the eyepiece with an effective focal length ($f_e$).

$$M = \frac{f_o}{f_e}$$

The magnification of a telescope is given by $M = \frac{f_o}{f_e}$.
The objective lens (or primary mirror) and the eyepiece of an optical instrument (e.g. a telescope and/or the like) form a compound optical system which has its own effective focal length.

Most optical instruments (e.g. telescopes and/or the like) allow a user to adjust the focus of the optical instrument when viewing or capturing an image of an object. Adjusting the focus typically involves moving one or more of the optical elements of the system relative to one another to make the light from an object converge (as much as possible) at a desired imaging location (e.g. at the eye of the user, at an imaging sensor and/or the like).

Focus adjustment may be thought of as adjusting the relative locations of one or more optical elements of the system such that the image plane (the plane where light from the object converges as much as possible) is located at the desired imaging location. Where light from an object converges at a desired imaging location, the image appears sharp and crisp - i.e. in focus. Where light from the object does not converge well at the desired imaging location, the image may appear blurry - i.e. out of focus.

A longer focal length tends to amplify the difference in appearance between images of objects that are in focus and out of focus at the desired imaging location. The focal length of an optical system is correlated with its degree of magnification - i.e. the longer the focal length, the higher the magnification. An optical property related to magnification is the "depth of field". Depth of field is a measure of the distance between the nearest and the furthest objects in a scene that generate an image that is judged or considered to be in focus. As a matter of optical principle, the longer the focal length of an optical system, the shallower the depth of field; the shorter the focal length, the deeper the depth of field. In other words, everything else being equal, viewing an image of a scene through an optical system with a relatively long focal length has more blurriness for the parts of the scene out of focus compared to viewing an image of the same scene through an optical system with a relatively short focal length.

Telescopes typically have relatively long focal lengths (i.e., higher magnification) when compared to other optical instruments, because most telescopes are used to view objects far away from the user, such as celestial bodies. Therefore, most telescopes have relatively shallow depths of field when compared to other optical instruments. Consequently, in a telescope, even a small adjustment of the focus could cause a big difference in the sharpness and the blurriness of the image at the image location. In addition, when the image of an object is out of focus, the image of the object viewed through a telescope tends to be dim. Consequently, it may be difficult for a user to identify to identify an object within an image when the image of the object is out of focus.

The issues outlined above may hamper the ability of a user to easily find the correct focus on a desired object. In practice, a user may have to make many focus adjustments before the user finds the correct focus. In some cases, a user may fail to find the correct focus.

In addition, it is often desirable to use telescopes in conjunction with different types of auxiliary optical devices, for example, different eyepieces, cameras, and/or the like. These different types of auxiliary optical devices often have their own optical properties (e.g. effective focal lengths) which in turn impact the optical properties of the optical system as a whole (i.e. the telescope in combination with the auxiliary optical device). When a user switches between different auxiliary optical devices to be used in conjunction with a telescope (e.g. between different eyepieces), there may be a desire for the user to adapt the use of the telescope to different "focus reference regimes".

In this disclosure, a "focus reference regime" refers to the focusing properties of a specific optical system. Different optical systems may have different focusing properties, and therefore, may be considered to have or to be in different "focus reference regimes". For example, a telescope coupled to a first eyepiece may provide an optical system having a first focus reference regime. When the same telescope is coupled to a second (different) eyepiece, the resultant second optical system may have a second focus reference regime that is different from the first focus reference regime. Fixed focusing reference indicators (e.g. lines markings, dial markings, numbers, etc.) associated with the conventional telescopes do not permit users to easily adapt to different focus reference regimes.

Some telescopes have implemented various forms of focus assistance to assist a user.

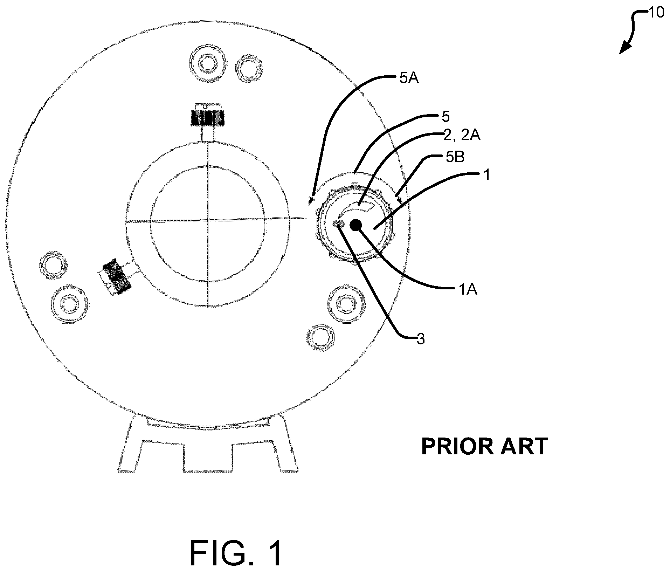

FIG. 1 schematically illustrates a conventional prior art telescope 10 with a focus assistance marking 2. By way of non-limiting example, prior art telescope 10 may be a Maksutov telescope or a Schmidt-Cassegrain telescope. Prior art telescope 10 includes a focus-adjustment dial 1. Focus-adjustment dial 1 may rotate about focus-adjustment axis 1A (which extends in and out of the page in the illustrated FIG. 1 view). Double-headed arrow 5 indicates the direction of rotation of focus-adjustment dial 1 about focus-adjustment axis 1A. Focus assistance marking 2 may be defined on a surface of the focus-adjustment dial 1.

For prior art telescope 10 shown in FIG. 1, focus assistance marking 2 comprises a tapering arc 2A. One end of tapering arc 2A is relatively narrow in width and the other end of tapering arc 2A is relatively wide in width, such that tapering arc 2A tapers off from the wide end towards the narrower end. Focus assistance marking 2 of the prior art telescope 10 also includes a marking 3 of the symbol "∞" representing focus at infinity. Marking 3 is positioned adjacent to the narrower end of tapering arc 2A.

Focus assistance marking 2 aids a user in adjusting focus by informing the user that the rotation of focus-adjustment dial 1 about focus-adjustment axis 1A in the rotational direction 5A causes relative movement of the optical components of telescope 10 such that the focus accommodates objects closer to infinity. On the other hand, rotation of focus-adjustment dial 1 about focus-adjustment axis 1A in the rotational direction 5B causes relative movement of the optical components of telescope 10 such that the focus accommodates objects closer to the telescope until the focus reaches the optical limit of telescope 10.

Focus assistance marking 2 of prior art telescope 10 indicates to a user the direction of focus adjustment. However, prior art telescope 10 does not have markings indicating the focal distance of telescope 10 - i.e. the distance between telescope 10 and an object that is in focus. Moreover, focus assistance marking 2 is defined on focus-adjustment dial 1 according to the specifications of prior art telescope 10 and is not adjustable when, for example, telescope 10 is used in conjunction with different auxiliary optical devices.

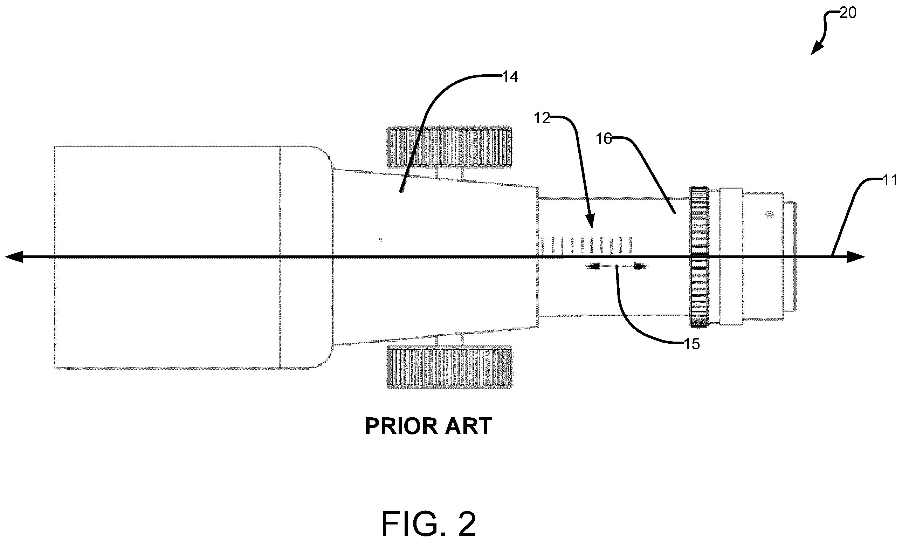

FIG. 2 schematically illustrates another conventional prior art telescope 20 with a focus assistance marking 12. By way of non-limiting example, prior art telescope 20 may be a refracting telescope or a Newtonian telescope. Prior art telescope 20 comprises a base 14 and a focus-adjusting tube 16 coupled to base 14. Focus-adjusting tube 16 may move relatively to base 14 along axial (longitudinal) direction 11. The movement of focus-adjusting tube 16 along axial direction 11 relative to base 14 moves the optical components of telescope 20 relative to one another and thereby adjusts the focus of telescope 20.

Focus assistance marking 12 are printed or otherwise marked on focus-adjusting tube 16. Focus assistance marking 12 comprises a plurality of line markings to denote focus references. A user may rely on the line markings to determine a particular focal reference along direction 15 which is substantially parallel to axial direction 11.

Prior art telescope 20 has the same shortcomings as prior art telescope 10. Prior art telescope 20 does not have markings indicating the focal distance of telescope 20 - i.e. the distance between telescope 20 and an object that is in focus. Further, while the line markings of prior art telescope 20 permit a user to gauge a focal reference along direction 15, the line markings are fixed on focus-adjusting tube 16 and not adjustable when, for example, telescope 20 is used in conjunction with different auxiliary optical devices.

Accordingly, there remains a desire for a telescope focus indicator that is adjustable and allows a user to find the correct focus using techniques that are relatively simple and/or not overly time consuming.

## Summary

One aspect of the invention provides an adjustable focus indicator system for an optical instrument. The system comprises: a first tube that extends in a longitudinal direction; a second tube that extends in the longitudinal direction, the second tube comprising a bore-defining surface shaped to define a bore that extends in the longitudinal direction wherein at least a portion of the first tube is located in the bore; and a focus indicator supported by, and moveable in the longitudinal direction relative to, one of the first and second tubes, the focus indicator comprising a first focus indicator mark visible to a user; wherein the one of the first and second tubes and the other one of the first and second tubes are moveable relative to one another in the longitudinal direction to thereby move the focus indicator and the first focus indicator mark relative to a second focus indicator mark visible to the user on the other one of the first and second tubes.

The one of the first and second tubes may be the second tube and the other one of the first and second tubes may be the first tube.

The second tube may be shaped to define a first opening which extends in the longitudinal direction and in a direction orthogonal to the longitudinal direction from an outer surface of the second tube through to the bore.

The focus indicator may be moveably supported for movement in the longitudinal direction in the first opening.

The focus indicator may be constrained to movement in the longitudinal direction by the interaction of the focus indicator and one or more edges of the first opening.

The focus indicator may form a friction fit within the first opening to prevent movement of the focus indicator in the longitudinal direction relative to the second tube in the absence of external force.

The second tube may comprise a guide which extends in the longitudinal direction for facilitating movement of the focus indicator relative to the second tube in the longitudinal direction.

The focus indicator may be constrained to movement in the longitudinal direction by the interaction of the focus indicator with the guide.

The focus indicator may form a friction fit with the guide to prevent movement of the focus indicator in the longitudinal direction relative to the second tube in the absence of external force.

The system may comprise a locking mechanism which is lockable to prevent movement of the focus indicator in the longitudinal direction relative to the second tube and unlockable to facilitate movement of the focus indicator in the longitudinal direction relative to the second tube.

The focus indicator may be shaped to define a second opening that extends in the longitudinal direction and in a direction orthogonal to the longitudinal direction from an outer surface of the focus indicator to an inner surface of the focus indicator such that the second focus indicator mark is visible through the second opening.

The one of the first and second tubes may be the first tube and the other one of the first and second tubes may be the second tube.

The second tube may be shaped to define a first opening which extends in the longitudinal direction and in a direction orthogonal to the longitudinal direction from an outer surface of the second tube through to the bore such that the focus indicator is visible through the first opening.

The first tube may comprise a longitudinally extending guide for facilitating movement of the focus indicator in the longitudinal direction relative to the first tube in the guide.

The focus indicator may be constrained to movement in the longitudinal direction by the interaction of the focus indicator and the guide.

The focus indicator may form a friction fit with the guide to prevent movement of the focus indicator in the longitudinal direction relative to the first tube in the absence of external force.

The first tube may be shaped to define a second opening which extends in the longitudinal direction and the focus indicator is moveably supported for movement in the longitudinal direction in the second opening.

The focus indicator may be constrained to movement in the longitudinal direction by the interaction of the focus indicator and the second opening.

The focus indicator may form a friction fit with the second opening to prevent movement of the focus indicator in the longitudinal direction relative to the first tube in the absence of external force.

The system may comprise a locking mechanism which is lockable to prevent movement of the focus indicator in the longitudinal direction relative to the first tube and unlockable to facilitate movement of the focus indicator in the longitudinal direction relative to the first tube.

One of the first and second focus indicator marks may provide a single mark at a specific longitudinal location and the other one of the first and second focus indicator marks may provide a number of markings that are spaced apart in the longitudinal direction.

Another aspect of the invention provides a method for calibrating the optical instrument disclosed herein. The method comprises: focusing the optical system on an object at a known distance from the optical system (or from the objective lens or primary mirror of the optical system); and, after focusing the optical system on the object, moving the focus indicator in the longitudinal direction relative to the one of the first and second tubes until an alignment of the single mark of the one of the first and second focus indicator marks is aligned at a particular location relative to the number of spaced apart markings of the other one of the first and second focus indicator marks.

The number of spaced apart markings of the other one of the first and second focus indicator marks may comprise a number of focus indicator values and the particular location may be indicative of a focus indicator value corresponding to the known distance.

Another aspect of the invention provides a method for adjusting a focus reference regime of the optical instrument disclosed herein. The method comprises adjusting a location of the focus indicator in the longitudinal direction relative to the one of the first and second tubes.

The method may comprise, prior to adjusting a location of the focus indicator, adding, removing or otherwise changing one or more auxiliary optical devices of the optical instrument.

Another aspect of the invention provides a method for adjusting a focus reference regime of the optical instrument disclosed herein. The method comprises: focusing the optical instrument on a first object and observing a first alignment of the single mark of the one of the first and second focus indicator marks relative to the number of spaced apart markings of the other one of the first and second focus indicator marks; adding, removing or otherwise changing one or more auxiliary optical devices of the optical instrument; and, after adding, removing or otherwise changing one or more auxiliary optical devices of the optical instrument: re-focusing the optical instrument on the first object; and adjusting a location of the focus indicator in the longitudinal direction relative to the one of the first and second tubes to achieve the first alignment.

The method may comprise calibrating the optical instrument according to the methods disclosed herein prior to focusing the optical instrument on the first object.

Other aspects of the invention provide apparatus having any new and inventive feature, combination of features, or sub-combination of features as described herein.

Other aspects of the invention provide methods having any new and inventive steps, acts, combination of steps and/or acts or sub-combination of steps and/or acts as described herein.

It is emphasized that the invention relates to all combinations of the above features, even if these are recited in different claims.

Further aspects and example embodiments are illustrated in the accompanying drawings and/or described in the following description.

## Brief Description of the Drawings

The accompanying drawings illustrate non-limiting example embodiments of the invention.

FIG. 1 is a cross sectional view of a telescope with a conventional prior art focus indicator.
FIG. 2 is a top view of a telescope with another conventional prior art focus indicator.
FIG. 3A and FIG. 3B are partial schematic illustrations of different configurations of a telescope system with an adjustable focus indicator under a first focus reference regime in accordance with an example embodiment.
FIG. 3C and FIG. 3D are partial schematic illustrations of different configurations of a telescope system with an adjustable focus indicator under a second focus reference regime in accordance with an example embodiment.
FIG. 4 is a partial cross sectional view of the telescope system of FIGs. 3A-D (collectively, FIG. 3) in accordance with an example embodiment.
FIG. 5A and FIG. 5B are partial schematic illustrations of different configurations of another telescope system with an adjustable focus indicator under a first focus reference regime in accordance with another example embodiment.
FIG. 5C and FIG. 5D are partial schematic illustrations of different configurations of another telescope system with an adjustable focus indicator under a second focus reference regime in accordance with another example embodiment.
FIG. 6 is a partial cross sectional view of the telescope system of FIGs. 5A-D (collectively FIG 5) in accordance with an example embodiment.
FIG. 7 is a partial cross sectional view of another telescope system with an adjustable focus indicator in accordance with another example embodiment.
FIG. 8 is a partial cross sectional view of another telescope system with an adjustable focus indicator in accordance with another example embodiment.
FIG. 9 is a schematic illustration of a method for adjusting the FIG. 3 telescope system to accommodate different focus reference regimens according to a particular embodiment.

## Detailed Description

An adjustable focus indicator for an optical instrument such as a telescope is disclosed.

Throughout the following description, specific details are set forth in order to provide a more thorough understanding of the invention. However, the invention may be practiced without these particulars. In other instances, well known elements have not been shown or described in detail to avoid unnecessarily obscuring the invention. Accordingly, the specification and drawings are to be regarded in an illustrative, rather than a restrictive sense.

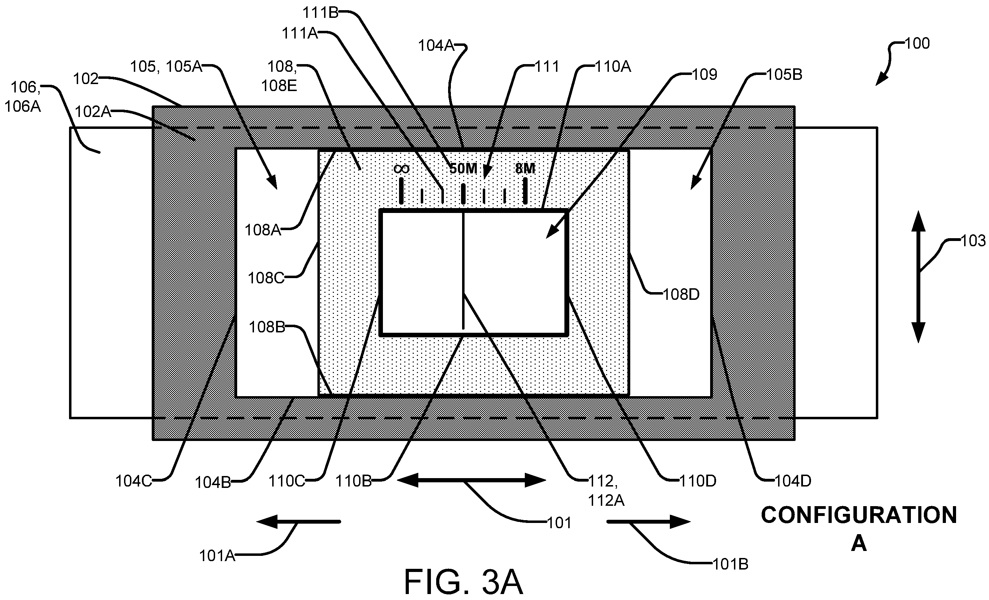

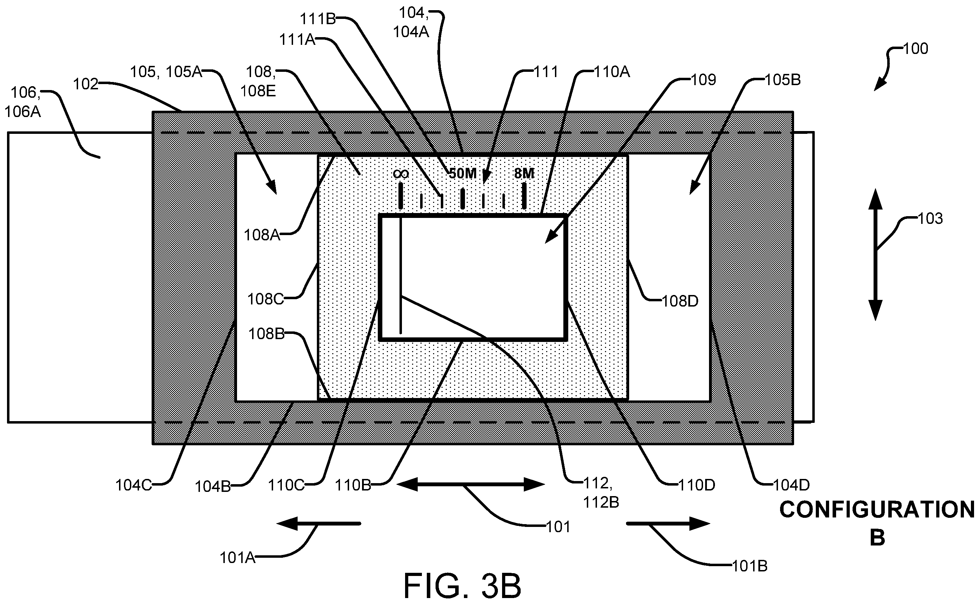

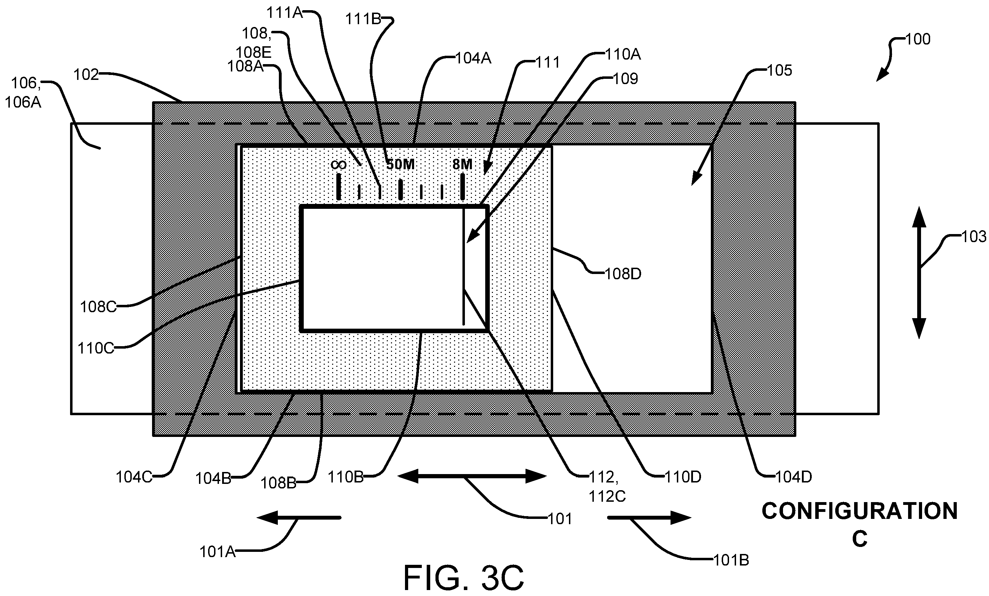

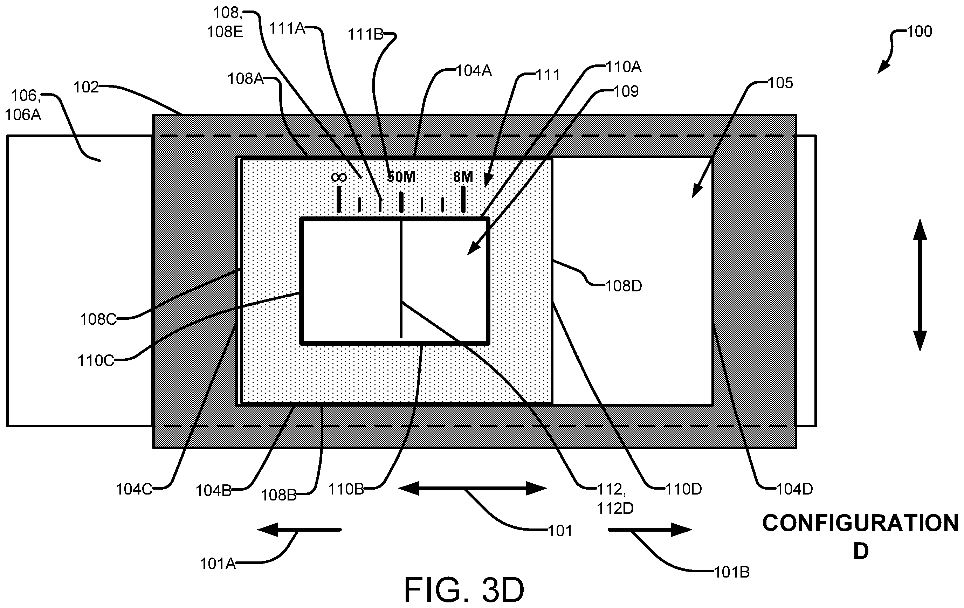

FIGs. 3A-D (collectively FIG. 3) schematically illustrate partial views of a telescope system 100 according to an example embodiment of this invention. FIGs. 3A and 3B show telescope system 100 in a first focus reference regime. FIGs. 3C and 3D show telescope system 100 in a second focus reference regime.

Telescope system 100 may comprise, but is not limited to, a Maksutov telescope or a Schmidt-Cassegrain telescope. Telescope system 100 comprises an adjustable focus indicator 108 which accommodates different focus reference regimes as described in more detail below.

In the illustrated embodiment, telescope system 100 comprises a base 102 and a focus-adjusting tube 106. Base 102 and focus-adjusting tube 106 are both tubular and extend in a longitudinal direction (indicated by double-headed arrow) 101. In the FIG. 3 embodiment, base 102 has a diameter larger than that of focus-adjusting tube 106, such that an inner surface of base 102 is shaped to define a bore and focus-adjusting tube 106 extends into and through the bore of base 102. The parts of focus-adjusting tube 106 within the bore of base 102 are shown in dashed lines. Focus-adjusting tube 106 may be moved in longitudinal directions 101 relative to base 102.

Base 102 may be shaped to define an opening 105 on a surface 102A of base 102. Opening 105 may be defined by one or more walls 104A-D of base 102 and may extend from outer surface 102A of base 102 through to an inner surface of base 102. An adjustable focus indicator 108 may be located within opening 105 and supported by base 102 (e.g. by walls 104A, 104B) for longitudinal movement in opening 105. Adjustable focus indicator 108 may comprise a generally rectangular perimeter, with edges 108A and 108B extending in longitudinal directions 101 and edges 108C and 108D extending in directions 103, although this particular shape is not generally necessary.

Edge 108A of adjustable focus indicator 108 may be adjacent to and in contact with wall 104A of base 102. Edge 108B of adjustable focus indicator 108 may be adjacent to and in contact with wall 104B of base 102. In some embodiments, the static friction force between edge 108A and wall 104A and the static friction force between edge 108B and wall 104B are sufficiently large such that adjustable focus indicator 108 is secured in position relative to base 102 and relative to opening 105 absent application of any external forces other than gravity. In some embodiments, edges 108A, 108B and/or walls 104A, 104B may comprise friction-enhancing features, such as ridges, grooves and/or the like to help secure the position of adjustable focus indicator 108 relative to base 102 and opening 105 in the absence of external forces. In some embodiments, a locking mechanism may be provided to secure the position of adjustable focus indicator 108 relative to base 102 and opening 105.

In some embodiments, opening 105 may be replaced by a guide which facilitates longitudinal movement of adjustable focus indicator 108 relative to base 102 and which provides a mechanism (e.g. a friction fit or locking mechanism) for holding adjustable focus indicator 108 in place relative to base 102 (e.g. in the absence of external force or unless the locking mechanism is unlocked). For brevity, telescope system 100 is described herein by referring to opening 105, it being understood that unless the context dictates otherwise, opening 105 could be replaced by a suitable guide to permit longitudinal movement of adjustable focus indicator 108 relative to base 102.

Adjustable focus indicator 108 may move in longitudinal directions 101 relative to base 102 (within opening 105) and focus-adjusting tube 106. Adjustable focus indicator 108 may be constrained (by the interaction of adjustable focus indicator 108 and opening 105) to movement in longitudinal directions 101 relative to base 102. Adjustable focus indicator 108 may move relative to base 102 in longitudinal direction 101A through opening space 105A until edge 108C of adjustable focus indicator 108 abuts wall 104C of base 102. Adjustable focus indicator 108 may also move relative to base 102 in longitudinal direction 101B through opening space 105B until edge 108D of adjustable focus indicator 108 abuts wall 104D of base 102.

Adjustable focus indicator 108 may itself be shaped to define an opening 109 defined by one or more walls 110A-D of adjustable focus indicator 108. Opening 109 may extend from a first surface 108E of adjustable focus indicator 108 through an opposing second surface (not visible in FIG. 3A) of adjustable focus indicator 108 such that an outer surface 106A of focus-adjusting tube 106 is visible through opening 109.

Adjustable focus indicator 108 may comprise focus-assistance markings 111 defined on a first (visible) surface 108E. Focus-assistance markings 111 may be printed or otherwise marked on first surface 108E of focus indicator 108 and may be visible through opening 105. Focus-assistance markings 111 may comprise line-type focus-assistance markings 111A (e.g. extending parallel to direction(s) 103) and/or other types of focus-assistance markings and/or focus indicator values 111B, for example, "8M", "50M", "∞", etc. Other types of focus-assistance markings 111 (including other types of line-type focus-assistance markings 111A and/or focus indicator values 111B are possible.

A focus-indicator mark (e.g. focus-indicator line, focus-indicator arrow and/or the like) 112 may be defined (e.g. printed or otherwise marked) on outer surface 106A of focus-adjusting tube 106 and may be visible through aperture 109. When focus-adjusting tube 106 moves in longitudinal directions 101 relative to base 102 and relative to adjustable focus indicator 108, focus-indicator mark 112 also moves relative to base 102 and relative to adjustable focus indicator 108 by the same distance. Consequently, focus-indicator mark 112 also moves relative to focus-assistance markings 111, allowing a user to track a focus reference (i.e. the position of focus-indicator mark112 relative to focus-assistance markings 111) while adjusting the focus of telescope system 100. The focus reference (i.e. the position of focus-indicator mark 112 relative to focus-assistance markings 111) together with the adjustability of adjustable focus indicator may be used to determine the focal distance (i.e. the distance between telescope system 100 and an object that is in focus) in different focus reference regimens, as discussed in more detail below.

When adjustable focus indicator 108 moves in longitudinal directions 101 relative to base 102 and opening 105, the focus reference of telescope system 100 (i.e. the position of focus-indicator mark 112 relative to focus-assistance markings 111) changes, even when the relative position between base 102 and focus-adjusting tube 106 has not changed. The relative position between adjustable focus indicator 108 and base 102 may be adjusted to correspond to different focus reference regimes of telescope system 100. That is, the relative positions of adjustable focus indicator 108 and base 102 (the position of adjustable focus indicator 108 within opening 105) may correspond to a particular focus reference regime. In configurations A and B of FIGs. 3A and 3B, telescope system 100 is operating under a first focus reference regime corresponding to a particular relative position between adjustable focus indicator 108 and base 102, where adjustable focus indicator 108 is located relatively close to the middle of opening 105.

In configuration A of FIG. 3A, focus-adjusting tube 106 is at a position such that focus-indicator mark 112 in position 112A is aligned with the line marking 111A corresponding to the "50M" focus indicator value 111B. This focus reference may in turn indicate, when telescope system 100 is properly calibrated, that the focal distance is at 50 meters from the objective lens (or primary mirror) of the telescope - i.e. that objects at a distance of 50m from the objective lens (or primary mirror) are focused at the desired imaging location.

In configuration B of FIG. 3B, the focus reference regime is the same as that in configuration A of FIG. 3A, which means that the relative position between base 102 and adjustable focus indicator 108 (with adjustable focus indictor 108 located relatively close to the middle of opening 105) is the same under configuration A and under configuration B. However, between configuration A of FIG. 3A and configuration B of FIG. 3B, a focus adjustment has been performed within the first focus reference regime. In configuration B of FIG, 3B (as compared to configuration A of FIG 3A), focus-adjusting tube 106 has moved in longitudinal direction 101A relative to both base 102 and adjustable focus indicator 108. Accordingly, focus-indicator mark 112 has also moved the same distance in longitudinal direction 101A relative to both base 102 and adjustable focus indicator 108. Focus-indicator mark 112 is now in position 112B and aligned with the line marking 111A corresponding to the "∞" focus indicator value 111B. This focus reference may in turn indicate, when telescope system is properly calibrated, that the focal distance is at infinity - i.e. that objects at very long distances away from the objective lens (or primary mirror) are focused at the desired imaging location.

FIGs. 3C and 3D schematically illustrate telescope system 100 in configurations C and D, where telescope system 100 is in a second focus reference regime that is different from the first focus reference regime shown in FIGs. 3A and 3B.

The focus reference regime of telescope system 100 may change for a variety of reasons. For example, auxiliary optical devices (e.g. eyepieces - not shown) of telescope system 100 may be changed, thereby changing the focusing property (e.g. the effective focal length) of telescope system 100. If the focusing property (e.g. the effective focal length) of telescope system 100 (including the telescope and any auxiliary optical device) changes, adjustable focus indicator 108 would not provide an accurate focus reference if adjustable focus indicator 108 was maintained in the same position relative to base 102 and opening 105. For example, the focus reference of the FIG. 3A configuration A is 50m, indicating that an object at 50m is in focus at the desired image location, but if the eyepiece of telescope system 100 is changed to an eyepiece having a different focal length, then telescope system 100 will have to re-focused, so that the image of the object was again at the desired focus location. This re-focusing of telescope system 100 will yield a different focus reference - i.e. focus-indicator mark 112 will line up with a different one of focus-assistance markings 111, even though the distance to the object has not changed. This lack of adjustability for different focus reference regimes is a drawback of prior art systems.

There is a desire, therefore, to establish accurate focus references for multiple focus reference regimes. This desire may be addressed by the adjustability of adjustable focus indicator 108 in the FIG. 3 embodiment, as described herein. As between a first focus reference regime (of FIGs. 3A and 3B) and a second focus reference regime (of FIGs. 3C and 3D), adjustable focus indicator 108 may be moved along longitudinal directions 101 relative to base 102 (e.g. in a longitudinal direction 101 within opening 105) to correspond to the second focus reference regime and to provide a correspondingly updated focus reference. Comparing configurations C and D of FIGs. 3C and 3D (second focus reference regime) to configurations A and B of FIGs. 3A and 3B (first focus reference regime), adjustable focus indicator 108 has been moved in longitudinal direction 101A within opening 105 (toward wall 104C of base 102 and leftward in the illustrated view).

Comparing FIGs. 3A and 3C, it can be seen that relative positions of focus-indicator mark 112 and base 102 and the relative positions of base 102 and focus-adjusting tube 106 are the same. However, the position 112C of focus-indicator mark 112 relative to adjustable focus indicator 108 in FIG. 3C is different from the position 112A of focus-indicator mark 112 relative to adjustable focus indicator 108 in FIG 3A. Similarly, comparing FIGs. 3B and 3D, it can be seen that relative positions of focus-indicator mark 112 and base 102 and the relative positions of base 102 and focus-adjusting tube 106 are the same. However, the position 112D of focus-indicator mark 112 relative to adjustable focus indicator 108 in FIG. 3D is different from the position 112B of focus-indicator mark 112 relative to adjustable focus indicator 108 in FIG 3B. The location of adjustable focus indicator 108 in the second focus reference regime of FIGs. 3C and 3D relative to that in the first focus reference regime of FIGs. 3A and 3B creates different focus references (i.e. different positions of focus-indicator mark 112 relative to focus-assistance markings 111) in the second focus reference regime relative to the first focus reference regime.

In operation, a user may adjust adjustable focus indicator 108 to establish a new focus reference regime with the following steps. First, the user may be aware of the distance between telescope system 100 (or, more precisely, the distance between the lens (or mirror) of telescope system 100) and an object in view based on a focus reference (i.e. the alignment of focus-indicator mark 112 with focus assistance markings 111) from a first configuration under the first focus reference regime, e.g., configuration A of FIG. 3A. Second, after altering the focusing property of telescope system 100 (e.g. by changing an auxiliary optical device, such as an eyepiece, of telescope system 100), the user may then adjust focus-adjusting tube 106 in longitudinal directions 101 until the user finds the correct focus for the same object. Focus-indicator mark 112 moves with focus-adjusting tube 106 accordingly. Third, after finding the correct focus for the same object viewed through telescope system 100 incorporating the new auxiliary optical device, since the user knows the distance of the object from telescope system 100, the user may then move adjustable focus indicator 108 in a longitudinal direction 101 until the correct focus reference is achieved (i.e. focus-indicator mark 112 is aligned with the correct focus assistance marking 111). At this point, the user has adjusted adjustable focus indicator 108 to a second focus reference regime with a different relative position between adjustable focus indicator 108 and base 102 (a different position of adjustable focus indicator 108 in longitudinal directions 101 relative to opening 105). The adjustment of adjustable focus indicator 108 may be manually controlled by a user or electronically actuated by a motor and controlled by a processor (not shown in drawings). In some embodiments adjustable focus indicator 108 may be automatically adjusted by a program to accommodate different focus reference regimes.

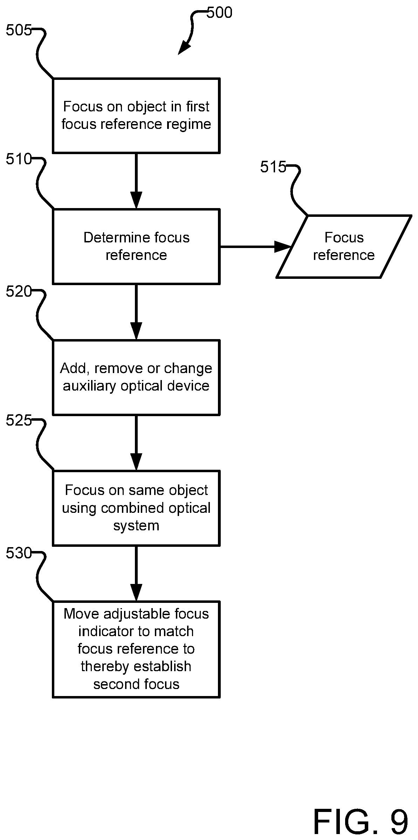

FIG. 9 is a schematic illustration of a method 500 for adjusting the position of adjustable focus indicator 108 within opening 105 to accommodate different focus reference regimes according to a particular embodiment. Method 500 starts in block 505, which involves focusing on an object in a first focus reference regime. The bock 505 first focus regime may involve the use of telescope system 100 comprising a first auxiliary optical element (e.g. a first eyepiece).

In some embodiments, block 505 may optionally involve calibrating telescope system 100 (or adjustable focus indicator 108) in the first focus reference regime. For example, the location of the object being focused on in block 505 (and more particularly the distance of the block 505 object from telescope system 100) may be known. If this is the case, then, once focus is established on the object in block 505, block 505 may optionally involve adjusting the position of adjustable focus indicator 108 to obtain a focus reference that matches the known distance of the object. For example, if it is known that the block 505 object is at 20m, then block 505 may involve calibrating telescope system 100 (or adjustable focus indicator 108) to the first reference regime by moving adjustable focus indicator 108 in one of longitudinal directions 101 until focus-indicator mark 112 is aligned with a focus indicator value 111B of 20m (or a particular line marking 111A indicative of 20m). Telescope system 100 (or adjustable focus indicator 108) is then calibrated for the first focus reference regime.

Once calibrated, telescope system 100 may be used to view other objects in the first focus reference regime - e.g. to focus on other objects in the first focus reference regime. When telescope system 100 (or adjustable focus indicator 108) is calibrated in a particular focus reference regime and telescope system 100 is focused on other objects in that particular focus reference regime, the distance of those other objects (from telescope system 100) will correspond to the focus reference (i.e. to the focus indicator value 111B or particular line marking 111A which is aligned with focus-indicator mark 112). It will be appreciated that calibration is an optional part of block 505 and is not necessary. In some embodiments, calibration may be performed prior to the performance of block 505.

Once telescope system 100 is focused on an object in block 505, method 500 proceeds to block 510 which comprises determining a focus reference 515. Focus reference 515 may correspond to a position of focus-indicator mark 112 relative to adjustable focus indicator 108 and, in particular, relative to focus assistance markings 111 (e.g. line-type focus-assistance markings 111A and/or associated focus indicator values 111B). Focus reference 515 may comprise a particular focus assistance marking 111 (e.g. a particular line marking 111A and/or a particular focus indicator value 111B) at which focus-indicator mark 112 is pointing when the block 505 object is in focus. As mentioned above, in some embodiments, focus reference 515 may be obtained electronically.

Method 500 then proceeds to block 520, where an auxiliary optical device of telescope system 100 is added removed and/or changed. As discussed above, the addition, removal and/or changing of such an auxiliary optical device may have an impact on the focusing property (e.g. the effective focal length) of telescope system 100. Method 500 then proceeds to block 525 which involves focusing the modified telescope system 100 (i.e. the telescope system 100 as modified in block 520) on the same object (i.e. the object focused on in block 505). To the extent that the focal length of telescope system 100 changes with the addition, removal and/or changing of an auxiliary optical component in block 520, re-focusing on the same object in block 530 will involve movement of focus-adjustment tube 106 relative to base 102 and corresponding movement of focus-indicator mark 112 relative to adjustable focus indicator 108 and focus-assistance markings 111.

Once the same object is in focus again, method 500 proceeds to block 530, which comprises adjusting the position of adjustable focus indicator 108 to match the block 510 focus reference 515. For example, if focus reference 515 obtained in block 510 was a focus indicator value 111B of 20m (or a particular line marking 111A), block 530 comprises moving adjustable focus indicator 108 in one of longitudinal directions 101 until focus-indicator mark 112 is once again aligned with the focus indicator value 111B of 20m (or the particular line marking 111A). Once adjustable focus indicator 108 is moved in one of longitudinal directions 101 until focus-indicator mark 112 is once again aligned with focus reference 515, then the new (second) focus regime is established.

It will be appreciated that if telescope system 100 (or adjustable focus indicator 108) was calibrated in the first focus reference regime (e.g. as part of block 505 or prior to the performance of block 505), then telescope system 100 (or adjustable focus indicator 108) will be calibrated in the second focus reference regime by performing the steps of method 500 (i.e. at the conclusion of block 530). When telescope system 100 (or adjustable focus indicator 108) is calibrated in the second focus reference regime, telescope system 100 may be used to view other objects in the second focus reference regime - e.g. to focus on other objects in the second focus reference regime. When telescope system 100 (or adjustable focus indicator 108) is calibrated in the second focus reference regime and telescope system 100 is focused on other objects in the second focus reference regime, the distance of those other objects (from telescope system 100) will correspond to the focus reference (e.g. to the focus indicator value 111B or particular line marking 111A which is aligned with focus-indicator mark 112). In general, when telescope system 100 (or adjustable focus indicator 108) is calibrated in a particular focus reference regime and telescope system 100 is focused on other objects in that particular focus reference regime, the distance of those other objects (from telescope system 100) will correspond to the focus reference (e.g. to the focus indicator value 111B or particular line marking 111A which is aligned with focus-indicator mark 112).

Once the second focus regime is established (e.g. at the conclusion of method 500), telescope system 100 may then be operated in the second focus reference regime. Configurations C and D of FIGs. 3C and 3D, illustrate the use of telescope system 100 in the second focus reference regime. Adjustable focus indicator 108 is at the same location relative to base 102 and relative to opening 105 in configurations C and D, indicating that configurations C and D are in the same (second) focus reference regime. However, comparing configurations C and D of FIGs. 3C and 3D, it can be seen that the longitudinal location of focus-adjusting tube 106 (relative to base 102) is different (e.g. to focus on different objects). Accordingly, the longitudinal location of focus-indicator mark 112 and the focus reference (i.e. the longitudinal location focus-indicator mark 112 relative to focus-assistance markings 111) are also different as between configurations C and D of FIGs. 3C and 3D. Assuming that method 500 was performed after calibrating telescope system 100 (or adjustable focus indicator 108) in the first focus reference regime (e.g. the first focus reference regime of FIGs 3A and 3B), then telescope system 100 (or adjustable focus indicator 108) will be calibrated in the second focus reference regime (e.g. the second focus reference regime of FIGs 3C and 3D) and the focus reference of configuration C (FIG. 3C) is indicative of an object at a distance of 8m and the focus reference of configuration D (FIG. 3D) is indicative of an object at a distance of 50m.

Accordingly, using telescope system 100 focus references (and knowledge above corresponding distances of objects) may be established for telescope system 100 when telescope system 100 incorporates different auxiliary optical device(s) (e.g. different eyepieces), even where such auxiliary optical device(s) cause telescope system 100 to have different overall focusing properties (e.g. different effective focal lengths). In contrast to conventional telescopes, once adjusted to a new focus reference regime (e.g. using method 500), telescope system 100 may be operated under the new focus reference regime with useful focus references being provided by the relative positions of focus-indicator mark 112 and adjustable focus indicator 108 (and in particular, focus assistance marks 111). Conventional prior art telescopes without an adjustable focus indicator 108 are unable to adjust their focus references to accommodate different focus reference regimes when the telescopes are coupled with different auxiliary optical device(s). Consequently, the static and non-adjustable focus references of such prior art telescopes become much less useful when the prior art telescopes are used in conjunction with different auxiliary optical device(s).

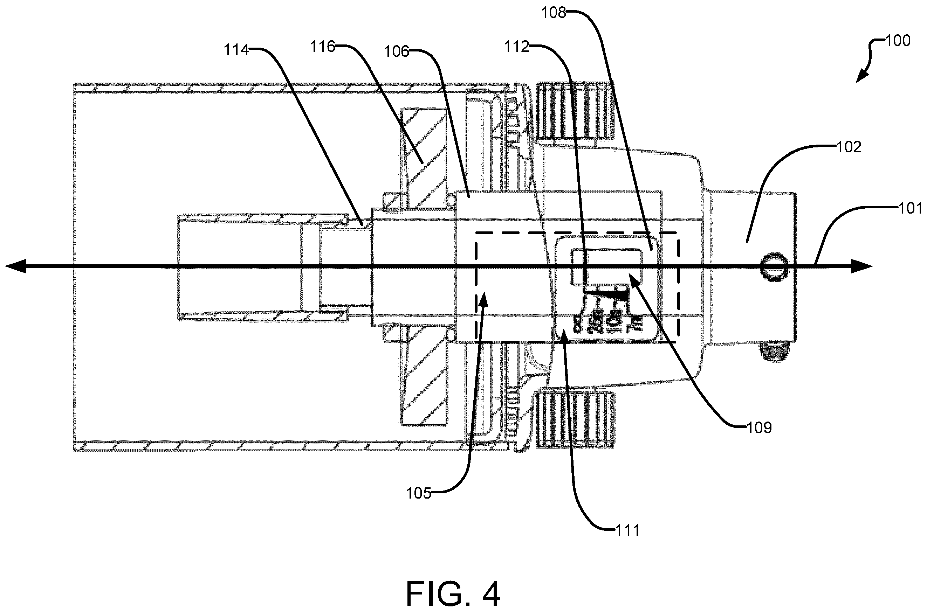

FIG. 4 schematically illustrates a partial cross sectional view of telescope system 100 comprising adjustable focus indicator 108.

Telescope system 100 may comprise light-admitting tube 114 which is coupled to focus-adjusting tube 106. Optical element(s) 116 may also be coupled to focus-adjusting tube 106. Optical element(s) 116 may comprise, for example, the objective lens or primary mirror of telescope system 100. In some embodiments, optical element(s) 116 is/are shaped to define a bore through which focus-adjusting tube 106 may extend longitudinally into and through such that an outer surface of focus-adjusting tube 106 bears against and supports an inner surface of optical elements 116.

As described above, opening 105 (boundary of which is shown in dashed lines) may be defined in base 102, which is coupled to and supports focus-adjusting tube 106. Adjustable focus indicator 108 may be located within opening 105 and may be supported by base 102 (e.g. by the walls of opening 105) in opening 105. Adjustable focus indicator 108 may move relative to base 102 (within opening 105) in longitudinal directions 101 and may be locked in position within opening 105 (e.g. in the absence of external forces) as described elsewhere herein. Adjustable focus indicator 108 may be shaped to define opening 109 such that focus-indicator mark 112 on outer surface 106A of focus-adjusting tube 106 is visible through opening 109.

Adjustable focus indicator 108 may have focus assistance markings 111 defined (e.g. printed or otherwise marked) on its surface. In the illustrated embodiment of FIG. 4, focus assistance markings 111 comprise a number of line-type focus assistance markings and focus indicator values of "∞", "25M", "10M" and "7M". Other types of focus assistance markings and/or focus indicator values are possible.

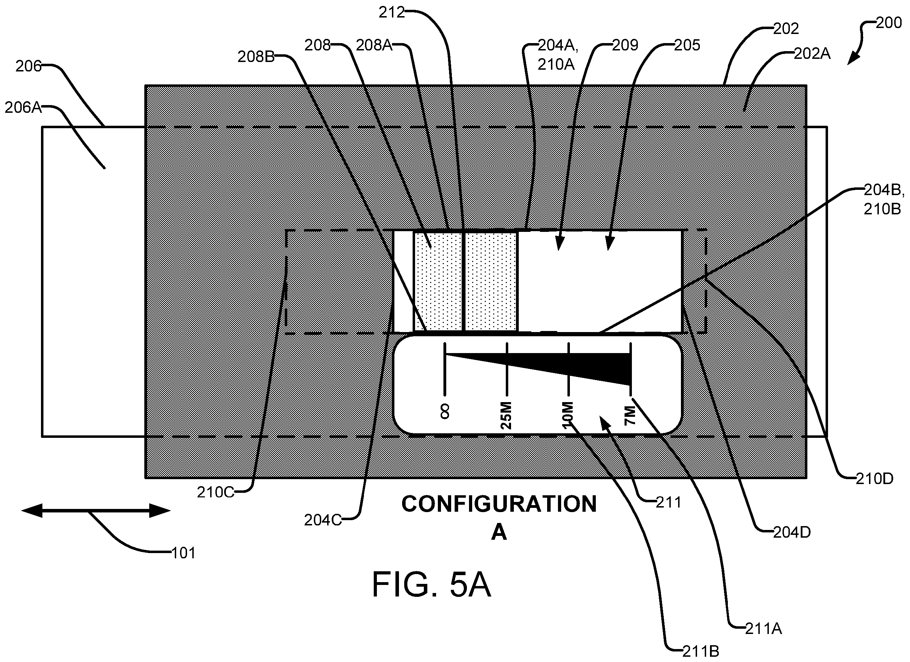

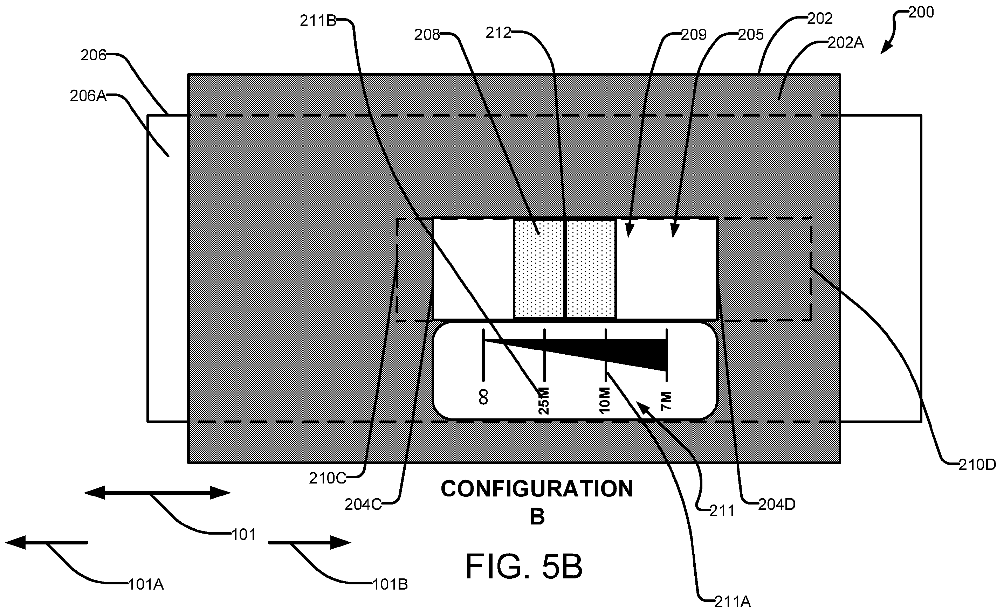

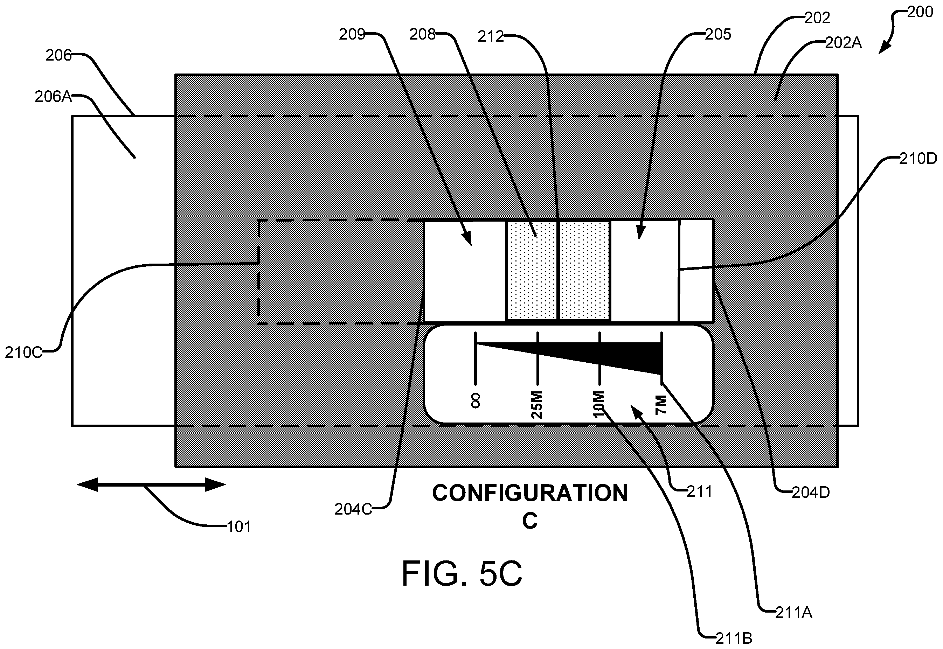

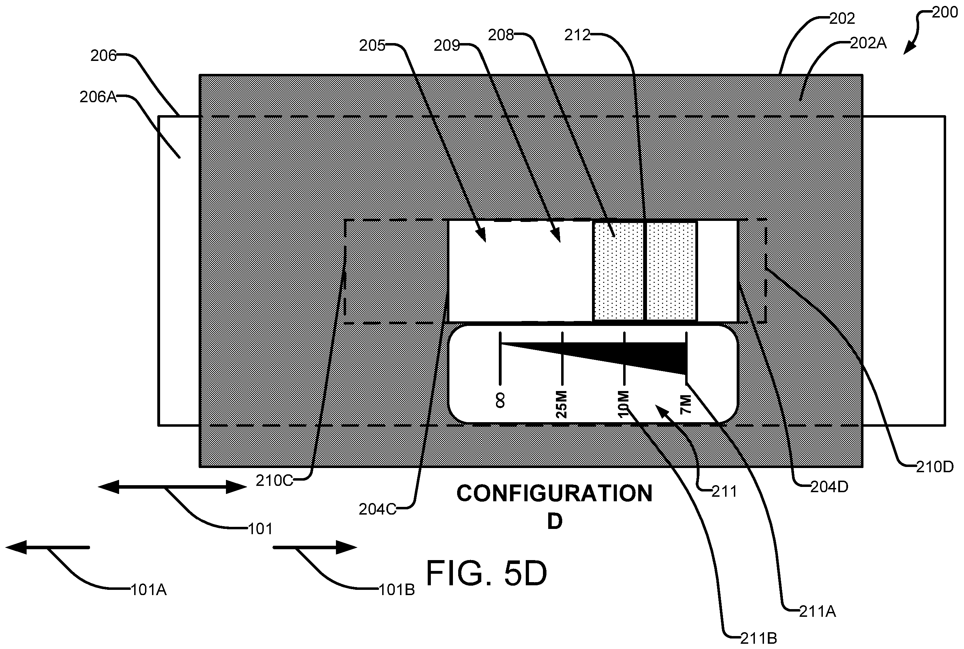

FIGs. 5A-D (collectively FIG. 5) illustrate partial views of a telescope system 200 according to another example embodiment FIGs. 5A and 5B show telescope system 200 in a first focus reference regime. FIGs. 5C and 5D show telescope system 200 in a second focus reference regime.

Referring to FIG. 5A, telescope system 200 comprises a base 202 with an outer surface 202A and a focus-adjusting tube 206 with an outer surface 206A. Base 202 and focus-adjusting tube 206 are both tubular and extend in longitudinal direction 101. In the FIG 5 embodiment, base 202 has a diameter larger than that of focus-adjusting tube 206 and an inner surface of base 202 is shaped to define a bore, such that focus-adjusting tube 206 extends into and through the bore of base 202. The parts of focus-adjusting tube 206 within the bore of base 202 are shown in dashed lines. Focus-adjusting tube 206 may be moved in longitudinal directions 101 relative to base 202.

Base 202 may be shaped to define an opening 205 on a surface 202A of base 202. Opening 205 may be defined by one or more walls 204A-D and may extend from outer surface 202A of base 202 through to an inner surface of base 202 such that the inner bore of base 202 is visible from outside outer surface 202A. Transparent materials may be inserted into opening 205. Outer surface 206A of focus-adjusting tube 206 may be shaped to define a guide 209 which may be defined by one or more walls 210A-D. Portions of walls 210A-D located in the bore of base 202 are shown in dashed outline. In the illustrated embodiment of FIG. 5, portions of walls 210A-B overlap with walls 204A-B, but this is not generally necessary. In other embodiments, guide 209 may have a different area or shape than opening 205.

An adjustable focus indicator 208 may be located in guide 209 and may be supported in guide 209 by focus-adjusting tube 206 (e.g. walls 210A, 210B of guide 209). Edge 208A of adjustable focus indicator 208 may be adjacent to and in contact with wall 210A of focus-adjusting tube 206. Edge 208B of adjustable focus indicator 208 may be adjacent to and in contact with wall 210B of focus-adjusting tube 206. In some embodiments, the static friction force between edge 208A and wall 210A and the static friction force between edge 208B and wall 210B are sufficiently large such that adjustable focus indicator 208 is secured in position relative to focus-adjusting tube 206 and relative to guide 209 absent application of any external forces other than gravity. In some embodiments, edges 208A, 208B and/or walls 210A, 210B may comprise friction-enhancing features, such as ridges, grooves and/or the like to help secure the position of adjustable focus indicator 208 relative to focus-adjusting tube 206 and guide 209 in the absence of external forces. In some embodiments, a locking mechanism may be provided to secure the position of adjustable focus indicator 208 relative to focus-adjusting tube 206 and guide 209.

A focus-indicator mark 212 may be defined (e.g. printed or otherwise marked) on the surface of adjustable focus indicator 208. Adjustable focus indicator 208 may be moved relative to base 202 and focus-adjusting tube 206 (within guide 209) in longitudinal directions 101. When adjustable focus indicator 208 moves in longitudinal directions 101, focus-indicator mark 212 also moves in longitudinal directions 101 by the same distance. Adjustable focus indicator 208 may be constrained (by the interaction of adjustable focus indicator 208 and guide 209) to movement in longitudinal directions 101 relative to focus-adjusting tube 206.

Focus assistance markings 211 may be defined (e.g. printed or otherwise marked) on outer surface 202A of base 202. Focus assistance markings 211 may comprise line-type focus assistance markings 211A and/or other types of markings and/or focus indicator values 211B, such as "∞", "25M", "10M" and "7M", etc. Other types of focus assistance markings 211 or other focus indicator values 211B are possible. The combination of focus-indicator mark 212 and focus assistance markings 211 provide a focus reference - i.e. the position of focus-indicator mark 212 relative to focus assistance markings 211. For example, in configuration A of FIG. 3A, the focus reference is between "∞" and "25M" and, in configuration B of FIG, 3B, the focus reference is between 10m and 25m.

When adjustable focus indicator 208 moves in longitudinal directions 101 relative to focus-adjusting tube 206 and guide 209, the focus reference of telescope system 200 (i.e. the position of focus-indicator mark 212 relative to focus-assistance markings 211) changes, even when the relative position between base 102 and focus-adjusting tube 106 has not changed. The relative position between adjustable focus indicator 208 and focus-adjusting tube 206 may be adjusted to correspond to different focus reference regimes of telescope system 200. That is, the relative positions of adjustable focus indicator 208 and focus-adjusting tube 206 (the position of adjustable focus indicator 208 within guide 209) may correspond to a particular focus reference regime. In configurations A and B of FIGs. 5A and 5B, telescope system 200 is operating in a first focus reference regime corresponding to a particular relative position between adjustable focus indicator 208 and focus-adjusting tube 206, where adjustable focus indicator 208 is located relatively close to the middle of guide 209. In configurations C and D of FIGs. 5C and 5D, telescope system 200 is operating in a second focus reference regime corresponding to a particular relative position between adjustable focus indicator 208 and focus-adjusting tube 206, where adjustable focus indicator 208 is located relatively close to the right hand side of opening 109.

Configurations A and B of FIGs. 5A and 5B, illustrate the use of telescope system 200 in a first focus reference regime. Adjustable focus indicator 208 is at the same location relative to focus-adjusting tube 206 and relative to guide 209 in configurations FIGs. 5A and 5B, indicating that configurations A and B of FIGs. 5A and 5B are in the same (first) focus reference regime. However, comparing configurations A and B of FIGs. 5A and 5B, it can be seen that the longitudinal location of focus-adjusting tube 206 (relative to base 202) is different (e.g. to focus on different objects). Accordingly, the longitudinal location of focus-indicator mark 212 and the focus reference (i.e. the longitudinal location focus-indicator mark 212 relative to focus-assistance markings 211) are also different as between configurations A and B of FIGs. 5A and 5B.

FIGs. 5C and 5D illustrate telescope system 200 in a second focus reference regime that is different from the first focus reference regime shown in FIGs. 5A and 5B. The focus reference of telescope system 200 may be adjusted to accommodate different focus reference regimes by moving adjustable focus indicator 208 in longitudinal directions 101 relative to focus-adjusting tube 206 (within guide 209). In FIGs. 5C and 5D, the relative position between adjustable focus indicator 208 and focus-adjusting tube 206 (the position of focus indicator 208 within guide 209) is different from the relative position between adjustable focus indicator 208 and focus-adjusting tube 206 (the position of focus indicator 208 within guide 209) in FIGs. 5A and 5B. Consequently, even when focus-adjusting tube 206 is at the same relative position to base 202 (e.g. in the case of FIGs. 5A and 5C), focus-indicator mark 212 is at a different alignment with respect to focus assistance markings 211, thereby providing different focus references as between the first focus reference regime of FIG. 5A and the second focus reference regime of FIG 5C.

The focus reference regime of telescope system 200 may change for a variety of reasons. For example, auxiliary optical devices (e.g. eyepieces - not shown) of telescope system 200 may be changed, thereby changing the focusing property (e.g. the effective focal length) of telescope system 200. If the focusing property (e.g. the effective focal length) of telescope system 200 (including the telescope and any auxiliary optical device) changes, adjustable focus indicator 208 would not provide an accurate focus reference if adjustable focus indicator 208 was maintained in the same position relative to focus-adjusting tube 206 and guide 209. This lack of adjustability for different focus reference regimes is a drawback of prior art systems.

There is a desire, therefore, to establish accurate focus references for multiple focus reference regimes. This desire may be addressed by the adjustability of adjustable focus indicator 208 in the FIG. 5 embodiment, as described herein. As between a first focus reference regime (of FIGs. 5A and 5B) and a second focus reference regime (of FIGs. 5C and 5D), adjustable focus indicator 208 may be moved along longitudinal directions 101 relative to focus-adjusting tube 206 (e.g.

in a longitudinal direction 101 within guide 209) to correspond to the second focus reference regime and to provide a correspondingly updated focus reference. Comparing configurations C and D of FIGs. 5C and 5D (second focus reference regime) to configurations A and B of FIGs. 5A and 5B (first focus reference regime), adjustable focus indicator 208 has been moved in longitudinal direction 101 within guide 209 (toward wall 210D of focus-adjusting tube 206 and rightward in the illustrated view).

Similar to the methods outlined above in relation to telescope system 100, a user may adjust the focus reference regime of telescope system 200 using the following steps. First the user may be aware of the distance between telescope system 200 and an object last observed under the previous focus reference regime. After the focusing property of telescope system 200 has changed (e.g. by changing an auxiliary optical device, such as an eyepiece), the user may move focus-adjusting tube 206 in longitudinal directions 101 relative to base 202 until the user finds the correct focus. Then, since the user knows the distance to the object, the user may then move adjustable focus indicator 208 within guide 209 in longitudinal directions 101 until focus-indicator mark 212 is aligned with the correct focus indicator values of focus assistance markings 211.

In some embodiments, method 500 of FIG. 9 may be used to change the focus reference regime of telescope system 200, except that rather than moving adjustable focus indicator 108 in longitudinal direction 101 relative to base 102 (and within opening 105) as was the case with telescope system 100, the focus reference regime of telescope system 200 is changed by moving adjustable focus indicator 208 in longitudinal direction 101 relative to focus-adjusting tube 206 (and within guide 209). Telescope system 200 (or adjustable focus indicator 208) may also be calibrated in a manner similar to that of telescope system 100 (or adjustable focus indicator 108) discussed above, except that rather than moving adjustable focus indicator 108 in longitudinal direction 101 relative to base 102 (and within opening 105) as was the case with calibrating telescope system 100, calibrating telescope system 200 (or adjustable focus indicator 208) involves moving adjustable focus indicator 208 in longitudinal direction 101 relative to focus-adjusting tube 206 (and within guide 209).

As was the case for telescope system 100 discussed above, if telescope system 200 (or adjustable focus indicator 208) was calibrated in a first focus reference regime (e.g. as part of block 505 or prior to the performance of block 505 in method 500), then telescope system 200 (or adjustable focus indicator 208) will be calibrated in a second focus reference regime by performing the steps of method 500 (i.e. at the conclusion of block 530). In general, when telescope system 200 (or adjustable focus indicator 208) is calibrated in a particular focus reference regime and telescope system 200 is focused on other objects in that particular focus reference regime, the distance of those other objects (from telescope system 200) will correspond to the focus reference (e.g. to the focus indicator value 211B or particular line marking 211A which is aligned with focus-indicator mark 212).

Once a second focus regime is established (e.g. at the conclusion of method 500), telescope system 200 may then be operated in the second focus reference regime. Configurations C and D of FIGs. 5C and 5D, illustrate the use of telescope system 200 in a second focus reference regime (different from the first focus reference regime of FIGs. 5A and 5B). Adjustable focus indicator 208 is at the same relative location to focus-adjusting tube 206 and relative to guide 209 in configurations C and D, indicating that configurations C and D are in the same (second) focus reference regimen. However, comparing configurations C and D of FIGs. 5C and 5D, it can be seen that the longitudinal location of focus-adjusting tube 106 (relative to base 102) is different (e.g. to focus on different objects). Accordingly, the longitudinal location of focus-indicator mark 212 is also different as between configurations C and D of FIGs. 5C and 5D. Assuming that method 500 was performed after calibrating telescope system 200 (or adjustable focus indicator 208) in the first focus reference regime (e.g. the first focus reference regime of FIGs 5A and 5B), then telescope system 200 (or adjustable focus indicator 208) will be calibrated in the second focus reference regime (e.g. the second focus reference regime of FIGs 5C and 5D) and the focus reference of configuration C (FIG. 5C) is indicative of an object at a distance of approximately 20m and the focus reference of configuration D (FIG. 5D) is indicative of an object at a distance of 8.5m.

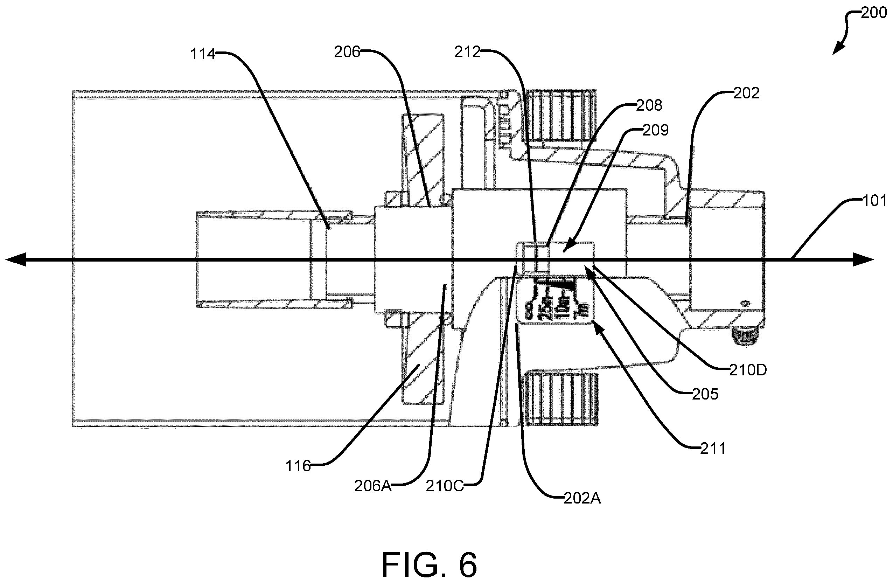

FIG. 6 schematically illustrates a partial cross sectional view of telescope system 200 comprising adjustable focus indicator 208.

Telescope system 200 is similar to telescope system 100 in some aspects. Components of telescope system 200 identical to those of telescope system 100 are labelled with the same reference numerals. Surface 206A of focus-adjusting tube 206 is shaped to define a guide 209. Adjustable focus indicator 208 may be located within guide 209 and may be supported in guide 209 by focus-adjusting tube 206 (e.g. walls 210A, 210B of guide 209) such that adjustable focus indicator 208 may move relative to focus-adjusting tube 206 in longitudinal directions 101 between walls 210C and 210D. Focus-indicator mark 212 may be defined (e.g. printed or otherwise marked) on the surface of adjustable focus indicator 208. Focus assistance markings 211 may be defined (e.g. printed or otherwise marked) on surface 202A of base 202.

In operation, to adjust focus of telescope system 200, focus-adjusting tube 206 may move relative to base 202. When focus-adjusting tube 206 moves relative to base 202, adjustable focus indicator 208 moves with focus-adjusting tube 206. In turn, focus-indicator mark 212 moves with focus-adjusting tube 206. Consequently, focus-indicator mark 212 moves relative to focus assistance markings 211 and therefore aids a user to keep track of the focus.

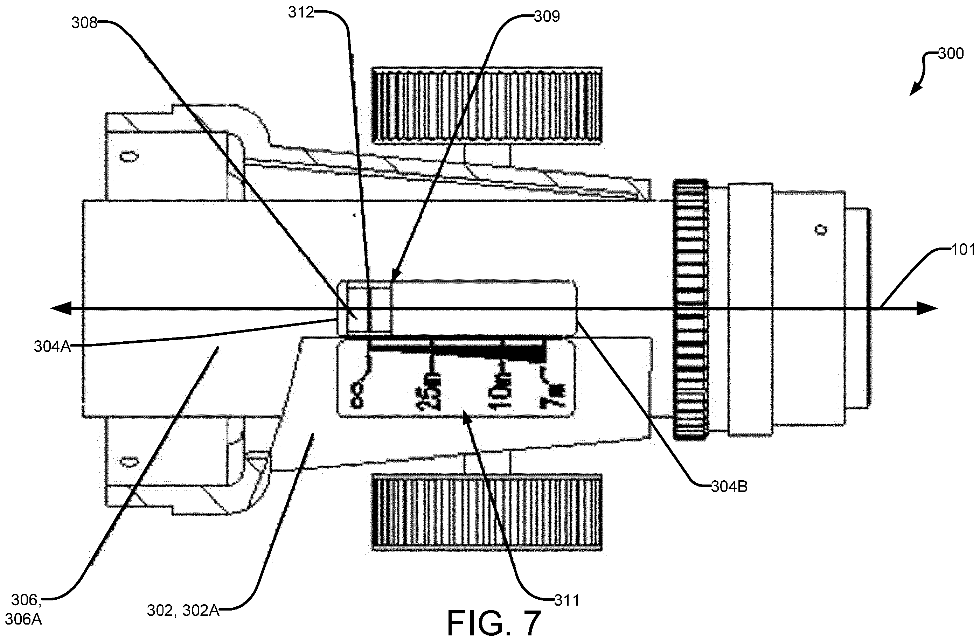

FIG. 7 schematically illustrates a partial cross sectional view of a telescope 300 according to another example embodiment. Telescope 300 includes an adjustable focus indicator 308. Telescope 300 may be, and is not limited to, a refracting telescope or a Newtonian telescope.

Telescope 300 comprises a base 302 with an outer surface 302A of base 302 as well as a focus-adjusting tube 306 and an outer surface 306A of focus-adjusting tube 306. Focus-adjusting tube 306 may move relative to base 302 in longitudinal directions 101.

Outer surface 306A of focus-adjusting tube 306 is shaped to define a guide 309. An adjustable focus indicator 308 may be located within guide 309 and may move relative to focus-adjusting tube 306 in longitudinal directions 101 within guide 309 (e.g. between walls 304A and 304B). Focus-indicator mark 312 may be defined (e.g. printed or otherwise marked) on the surface of adjustable focus indicator 308. Focus assistance markings 311 are defined (e.g. printed or otherwise marked) on outer surface 302A of base 302. Focus assistance markings 311 may contain any suitable markings or focus indicator values to assist a user in determining the focus. Because adjustable focus indicator 308 moves in longitudinal directions relative to focus-adjusting tube 306, focus adjustment, calibration and changing the focus reference regime of telescope 300 may be similar to that of telescope system 200 described elsewhere herein.

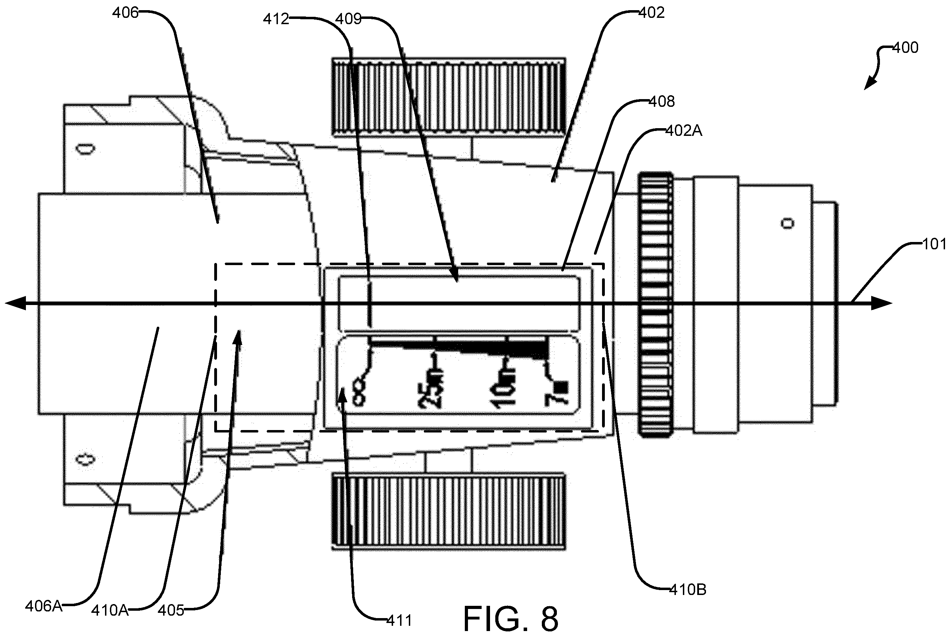

FIG. 8 schematically illustrates a partial cross sectional view of a telescope 400 according to another example embodiment. Telescope 400 includes an adjustable focus indicator 408. Telescope 400 may be, and is not limited to, a refracting telescope or a Newtonian telescope.

Telescope 400 comprises a base 402 with an outer surface 402A and a focus-adjusting tube 406 with an outer surface 406A. Focus-adjusting tube 406 may move relative to base 402 in longitudinal directions 101. Base 402 is shaped to define an opening 405. An adjustable focus indicator 408 is located within opening 405 (boundary of which is shown in dashed lines) and may move relative to base 402 (within opening 405) in longitudinal directions 101. Focus assistance markings 411 may be defined (e.g. printed or otherwise marked) on the surface of adjustable focus indicator 408. Adjustable focus indicator 408 may be shaped to define an opening 409. Focus-indicator mark 412 may be defined (e.g. printed or otherwise marked) on outer surface 406A of 406 such that focus-indicator mark 412 is visible through openings 405, 409.

Because adjustable focus indicator 408 moves in longitudinal directions relative to base 402, focus adjustment, calibration and changing the focus reference regime of telescope 400 may be similar to that of telescope system 100 described elsewhere herein.

Telescope focusing mechanisms are not limited to the tubes of the the telescope system itself. In some telescope systems or other optical systems, focusing mechanisms may additionally or alternatively be implemented in other parts of the system. For example, focusing mechanisms may additionally or alternatively be implemented in the eyepiece of some optical systems and or in a focus subs-system located optically adjacent to the eyepiece and/or to the telescope tube. In this respect, the base (e.g. bases 102, 202, 302, 402) described herein may additionally or alternatively be provided in other parts of their respective telescope systems or optical systems and focus-adjusting tubes (e.g. focus-adjusting tubes 106, 206, 306 and 406) may be may additionally or alternatively be provided in other parts of their respective telescope systems or optical systems. For example, another pair of tubes in a different part of such optical systems may be provided with features analogous to those described in connection with the bases and focus-adjusting tubes described herein.

Where a component (e.g. a software module, processor, assembly, device, circuit, etc.) is referred to herein, unless otherwise indicated, reference to that component (including a reference to a "means") should be interpreted as including as equivalents of that component any component which performs the function of the described component (i.e., that is functionally equivalent), including components which are not structurally equivalent to the disclosed structure which performs the function in the illustrated exemplary embodiments of the invention.

**Interpretation of Terms**

Unless the context clearly requires otherwise, throughout the description and the claims:

- "comprise", "comprising", and the like are to be construed in an inclusive sense, as opposed to an exclusive or exhaustive sense; that is to say, in the sense of "including, but not limited to";
- "connected", "coupled", or any variant thereof, means any connection or coupling, either direct or indirect, between two or more elements; the coupling or connection between the elements can be physical, logical, or a combination thereof;
- "herein", "above", "below", and words of similar import, when used to describe this specification, shall refer to this specification as a whole, and not to any particular portions of this specification;
- "or", in reference to a list of two or more items, covers all of the following interpretations of the word: any of the items in the list, all of the items in the list, and any combination of the items in the list;
- the singular forms "a", "an", and "the" also include the meaning of any appropriate plural forms. These terms ("a", "an", and "the") mean one or more unless stated otherwise;

- "and/or" is used to indicate one or both stated cases may occur, for example A and/or B includes both (A and B) and (A or B);
- "approximately" when applied to a numerical value means the numerical value $\pm$ 10%;
- where a feature is described as being "optional" or "optionally" present or described as being present "in some embodiments" it is intended that the present disclosure encompasses embodiments where that feature is present and other embodiments where that feature is not necessarily present and other embodiments where that feature is excluded. Further, where any combination of features is described in this application this statement is intended to serve as antecedent basis for the use of exclusive terminology such as "solely," "only" and the like in relation to the combination of features as well as the use of "negative" limitation(s)" to exclude the presence of other features; and
- "first" and "second" are used for descriptive purposes and cannot be understood as indicating or implying relative importance or indicating the number of indicated technical features.

Words that indicate directions such as "vertical", "transverse", "horizontal", "upward", "downward", "forward", "backward", "inward", "outward", "left", "right", "front", "back", "top", "bottom", "below", "above", "under", and the like, used in this description and any accompanying claims (where present), depend on the specific orientation of the apparatus described and illustrated. The subject matter described herein may assume various alternative orientations. Accordingly, these directional terms are not strictly defined and should not be interpreted narrowly.

Where a range for a value is stated, the stated range includes all sub-ranges of the range. It is intended that the statement of a range supports the value being at an endpoint of the range as well as at any intervening value to the tenth of the unit of the lower limit of the range, as well as any subrange or sets of sub ranges of the range unless the context clearly dictates otherwise or any portion(s) of the stated range is specifically excluded. Where the stated range includes one or both endpoints of the range, ranges excluding either or both of those included endpoints are also included in the invention.

Certain numerical values described herein are preceded by "about". In this context, "about" provides literal support for the exact numerical value that it precedes, the exact numerical value $\pm$5%, as well as all other numerical values that are near to or approximately equal to that numerical value. Unless otherwise indicated a particular numerical value is included in "about" a specifically recited numerical value where the particular numerical value provides the substantial equivalent of the specifically recited numerical value in the context in which the specifically recited numerical value is presented. For example, a statement that something has the numerical value of "about 10" is to be interpreted as: the set of statements:

- in some embodiments the numerical value is 10;

- in some embodiments the numerical value is in the range of 9.5 to 10.5;

and if from the context the person of ordinary skill in the art would understand that values within a certain range are substantially equivalent to 10 because the values with the range would be understood to provide substantially the same result as the value 10 then "about 10" also includes:

- in some embodiments the numerical value is in the range of C to D where C and D are respectively lower and upper endpoints of the range that encompasses all of those values that provide a substantial equivalent to the value 10

Specific examples of systems, methods and apparatus have been described herein for purposes of illustration. These are only examples. The technology provided herein can be applied to systems other than the example systems described above. Many alterations, modifications, additions, omissions, and permutations are possible within the practice of this invention. This invention includes variations on described embodiments that would be apparent to the skilled addressee, including variations obtained by: replacing features, elements and/or acts with equivalent features, elements and/or acts; mixing and matching of features, elements and/or acts from different embodiments; combining features, elements and/or acts from embodiments as described herein with features, elements and/or acts of other technology; and/or omitting combining features, elements and/or acts from described embodiments.

As will be apparent to those of skill in the art upon reading this disclosure, each of the individual embodiments described and illustrated herein has discrete components and features which may be readily separated from or combined with the features of any other described embodiment(s) without departing from the scope of the present invention.

Any aspects described above in reference to apparatus may also apply to methods and vice versa.

Any recited method can be carried out in the order of events recited or in any other order which is logically possible. For example, while processes or blocks are presented in a given order, alternative examples may perform routines having steps, or employ systems having blocks, in a different order, and some processes or blocks may be deleted, moved, added, subdivided, combined, and/or modified to provide alternative or subcombinations. Each of these processes or blocks may be implemented in a variety of different ways. Also, while processes or blocks are at times shown as being performed in series, these processes or blocks may instead be performed in parallel, simultaneously or at different times.

Various features are described herein as being present in "some embodiments". Such features are not mandatory and may not be present in all embodiments. Embodiments of the invention may include zero, any one or any combination of two or more of such features. All possible combinations of such features are contemplated by this disclosure even where such features are shown in different drawings and/or described in different sections or paragraphs. This is limited only to the extent that certain ones of such features are incompatible with other ones of such features in the sense that it would be impossible for a person of ordinary skill in the art to construct a practical embodiment that combines such incompatible features. Consequently, the description that "some embodiments" possess feature A and "some embodiments" possess feature B should be interpreted as an express indication that the inventors also contemplate embodiments which combine features A and B (unless the description states otherwise or features A and B are fundamentally incompatible).This is the case even if features A and B are illustrated in different drawings and/or mentioned in different paragraphs, sections or sentences.

It is therefore intended that the following appended claims and claims hereafter introduced are interpreted to include all such modifications, permutations, additions, omissions, and sub-combinations as may reasonably be inferred. The scope of the claims should not be limited by the preferred embodiments set forth in the examples, but should be given the broadest interpretation consistent with the description as a whole.

## Claims

1. An adjustable focus indicator system for an optical instrument, the system comprising:

   a first tube that extends in a longitudinal direction;
   a second tube that extends in the longitudinal direction, the second tube comprising a bore-defining surface shaped to define a bore that extends in the longitudinal direction wherein at least a portion of the first tube is located in the bore; and
   a focus indicator supported by, and moveable in the longitudinal direction relative to, one of the first and second tubes, the focus indicator comprising a first focus indicator mark visible to a user;
   wherein the one of the first and second tubes and the other one of the first and second tubes are moveable relative to one another in the longitudinal direction to thereby move the focus indicator and the first focus indicator mark relative to a second focus indicator mark visible to the user on the other one of the first and second tubes.

2. The system of claim 1 or any other claim herein wherein the one of the first and second tubes is the second tube and the other one of the first and second tubes is the first tube.

3. The system of claim 2 or any other claim herein wherein the second tube is shaped to define a first opening which extends in the longitudinal direction and in a direction orthogonal to the longitudinal direction from an outer surface of the second tube through to the bore.

4. The system of claim 3 or any other claim herein wherein the focus indicator is moveably supported for movement in the longitudinal direction in the first opening.

5. The system of claim 4 or any other claim herein wherein the focus indicator is constrained to movement in the longitudinal direction by the interaction of the focus indicator and one or more edges of the first opening.

6. The system of any one of claims 4 to 5 or any other claim herein wherein the focus indicator forms a friction fit within the first opening to prevent movement of the focus indicator in the longitudinal direction relative to the second tube in the absence of external force.

7. The system of claim 2 or any other claim herein wherein the second tube comprises a guide which extends in the longitudinal direction for facilitating movement of the focus indicator relative to the second tube in the longitudinal direction.

8. The system of claim 7 or any other claim herein wherein the focus indicator is constrained to movement in the longitudinal direction by the interaction of the focus indicator with the guide.

9. The system of any one of claims 7 to 8 or any other claim herein wherein the focus indicator forms a friction fit with the guide to prevent movement of the focus indicator in the longitudinal direction relative to the second tube in the absence of external force.

10. The system of any one of claims 2 to 9 or any other claim herein comprising a locking mechanism which is lockable to prevent movement of the focus indicator in the longitudinal direction relative to the second tube and unlockable to facilitate movement of the focus indicator in the longitudinal direction relative to the second tube.

11. The system of any one of claims 2 to 10 or any other claim herein wherein the focus indicator is shaped to define a second opening that extends in the longitudinal direction and in a direction orthogonal to the longitudinal direction from an outer surface of the focus indicator to an inner surface of the focus indicator such that the second focus indicator mark is visible through the second opening.

12. The system of claim 1 or any other claim herein wherein the one of the first and second tubes is the first tube and the other one of the first and second tubes is the second tube.

13. The system of claim 12 or any other claim herein wherein the second tube is shaped to define a first opening which extends in the longitudinal direction and in a direction orthogonal to the longitudinal direction from an outer surface of the second tube through to the bore such that the focus indicator is visible through the first opening.

14. The system of claim 13 or any other claim herein wherein the first tube comprises a longitudinally extending guide for facilitating movement of the focus indicator in the longitudinal direction relative to the first tube in the guide.

15. The system of claim 14 or any other claim herein wherein the focus indicator is constrained to movement in the longitudinal direction by the interaction of the focus indicator and the guide.

16. The system of any one of claims 13 to 14 or any other claim herein wherein the focus indicator forms a friction fit with the guide to prevent movement of the focus indicator in the longitudinal direction relative to the first tube in the absence of external force.

17. The system of claim 13 or any other claim herein wherein the first tube is shaped to define a second opening which extends in the longitudinal direction and the focus indicator is moveably supported for movement in the longitudinal direction in the second opening.

18. The system of claim 17 or any other claim herein wherein the focus indicator is constrained to movement in the longitudinal direction by the interaction of the focus indicator and the second opening.

19. The system of any one of claims 17 to 18 or any other claim herein wherein the focus indicator forms a friction fit with the second opening to prevent movement of the focus indicator in the longitudinal direction relative to the first tube in the absence of external force.

20. The system of any one of claims 12 to 19 or any other claim herein comprising a locking mechanism which is lockable to prevent movement of the focus indicator in the longitudinal direction relative to the first tube and unlockable to facilitate movement of the focus indicator in the longitudinal direction relative to the first tube.

21. The system of any one of claims 1 to 20 wherein one of the first and second focus indicator marks provides a single mark at a specific longitudinal location and the other one of the first and second focus indicator marks provides a number of markings that are spaced apart in the longitudinal direction.

22. A method for calibrating the optical instrument of claim 21 or any other claim herein, the method comprising:

   focusing the optical system on an object at a known distance from the optical system (or from the objective lens or primary mirror of the optical system);
   after focusing the optical system on the object, moving the focus indicator in the longitudinal direction relative to the one of the first and second tubes until an alignment of the single mark of the one of the first and second focus indicator marks is aligned at a particular location relative to the number of spaced apart markings of the other one of the first and second focus indicator marks.

23. The method of claim 22 or any other claim herein wherein the number of spaced apart markings of the other one of the first and second focus indicator marks comprise a number of focus indicator values and the particular location is indicative of a focus indicator value corresponding to the known distance.

24. A method for adjusting a focus reference regime of the optical instrument of claim 21 or any other claim herein, the method comprising:
   adjusting a location of the focus indicator in the longitudinal direction relative to the one of the first and second tubes.

25. The method of claim 24 or any other claim herein comprising, prior to adjusting a location of the focus indicator, adding, removing or otherwise changing one or more auxiliary optical devices of the optical instrument.

26. A method for adjusting a focus reference regime of the optical instrument of claim 21 or any other claim herein, the method comprising:

focusing the optical instrument on a first object and observing a first alignment of the single mark of the one of the first and second focus indicator marks relative to the number of spaced apart markings of the other one of the first and second focus indicator marks;
adding, removing or otherwise changing one or more auxiliary optical devices of the optical instrument; and
after adding, removing or otherwise changing one or more auxiliary optical devices of the optical instrument:

   re-focusing the optical instrument on the first object; and
   adjusting a location of the focus indicator in the longitudinal direction relative to the one of the first and second tubes to achieve the first alignment.

27. The method of claim 26 or any other claim herein comprising calibrating the optical instrument according to the method of any one of claims 22 to 23 prior to focusing the optical instrument on the first object.

28. Apparatus having any new and inventive feature, combination of features, or sub-combination of features as described herein.

29. Methods having any new and inventive steps, acts, combination of steps and/or acts or sub-combination of steps and/or acts as described herein.

FIG. 1

PRIOR ART

PRIOR ART

FIG. 2

FIG. 3A

CONFIGURATION A

EP 4 592 729 A1

FIG. 3B

CONFIGURATION B

FIG. 3C

CONFIGURATION C

EP 4 592 729 A1

**CONFIGURATION D**

**FIG. 3D**

FIG. 4

**FIG. 5A**

CONFIGURATION A

CONFIGURATION B

FIG. 5B

**CONFIGURATION C**

FIG. 5C

CONFIGURATION D

FIG. 5D

FIG. 6

EP 4 592 729 A1

FIG. 7

EP 4 592 729 A1

FIG. 8

500

505
Focus on object in first
focus reference regime

510
Determine focus
reference

515
Focus
reference

520
Add, remove or change
auxiliary optical device

525
Focus on same object
using combined optical
system

530
Move adjustable focus
indicator to match
focus reference to
thereby establish
second focus

# FIG. 9

## INTERNATIONAL SEARCH REPORT

| | International application No. |
|---|---|
| | **PCT/CN2022/119501** |

### A. CLASSIFICATION OF SUBJECT MATTER

G02B 23/00(2006.01)i

According to International Patent Classification (IPC) or to both national classification and IPC

### B. FIELDS SEARCHED

Minimum documentation searched (classification system followed by classification symbols)

G02B

Documentation searched other than minimum documentation to the extent that such documents are included in the fields searched

Electronic data base consulted during the international search (name of data base and, where practicable, search terms used)

CNPAT; CNKI; EPODOC; WPI: 南通斯密特森光电科技有限公司, 望远镜, 聚焦, 目标, 刻度, 移动, 基准, telescope, focus, target, scale, move, benchmark

### C. DOCUMENTS CONSIDERED TO BE RELEVANT

| Category* | Citation of document, with indication, where appropriate, of the relevant passages | Relevant to claim No. |
|---|---|---|
| A | CN 216523944 U (96963 UNIT OF PLA) 13 May 2022 (2022-05-13) description, paragraphs [0042]-[0043] and [0050], and figures 4-5 | 1-29 |
| A | CN 112817139 A (SWAROVSKI OPTIK AG AND CO KG) 18 May 2021 (2021-05-18) entire document | 1-29 |
| A | CN 211928297 U (YUNNAN HANRUI OPTICAL INSTRUMENT CO., LTD.) 13 November 2020 (2020-11-13) entire document | 1-29 |
| A | CN 109983296 A (DEBEN GROUP INDUSTRIES LIMITED) 05 July 2019 (2019-07-05) entire document | 1-29 |
| A | CN 1310329 A (FUJITSU LTD.) 29 August 2001 (2001-08-29) entire document | 1-29 |
| A | US 2005062870 A1 (PENTAX CORP.) 24 March 2005 (2005-03-24) entire document | 1-29 |
| A | JP 1062673 A (MINOLTA CO., LTD.) 06 March 1998 (1998-03-06) entire document | 1-29 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 December 2022** | **11 January 2023** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/119501**

| Patent document cited in search report | | | Publication date (day/month/year) | Patent family member(s) | | | Publication date (day/month/year) |
|---|---|---|---|---|---|---|---|
| CN | 216523944 | U | 13 May 2022 | None | | | |
| CN | 112817139 | A | 18 May 2021 | US | 2021149179 | A1 | 20 May 2021 |
| | | | | EP | 3822688 | A1 | 19 May 2021 |
| | | | | AT | 522799 | B1 | 15 February 2021 |
| CN | 211928297 | U | 13 November 2020 | None | | | |
| CN | 109983296 | A | 05 July 2019 | EP | 3545253 | A1 | 02 October 2019 |
| | | | | GB | 201619743 | D0 | 04 January 2017 |
| | | | | WO | 2018096475 | A1 | 31 May 2018 |
| | | | | US | 2020056859 | A1 | 20 February 2020 |
| CN | 1310329 | A | 29 August 2001 | US | 6598332 | B1 | 29 July 2003 |
| | | | | JP | 2001241892 | A | 07 September 2001 |
| US | 2005062870 | A1 | 24 March 2005 | JP | 2005099312 | A | 14 April 2005 |
| JP | 1062673 | A | 06 March 1998 | JP | H1062673 | A | 06 March 1998 |

Form PCT/ISA/210 (patent family annex) (January 2015)

33